# FASCICULE DE BREVET EUROPEEN

(11) **EP 2 315 679 B1**
(45) Date de publication et mention de la délivrance du brevet: **25.01.2012**
(21) Numéro de dépôt: 09737094.4
(22) Date de dépôt: 21.07.2009
(51) Int. Cl.: B60K 15/04, F16K 21/18, F16K 31/26

(54) **DISPOSITIF ANTI-SIPHONAGE**
ROHRUNTERBRECHERVORRICHTUNG
ANTI-SIPHONING DEVICE

(30) Priorité: 23.07.2008 FR 0855007; 09.09.2008 FR 0856053
(43) Date de publication de la demande: 04.05.2011
(73) Titulaire: Lecrosnier, Lionel, 34160 Saint-Genies des Mourgues (FR)
(72) Inventeur: Lecrosnier, Lionel, 34160 Saint-Genies des Mourgues (FR)
(74) Mandataire: Rhein, Alain
(86) Numéro de dépôt international: PCT/FR2009/051451
(87) Numéro de publication internationale: WO 2010/010285

(56) Documents cités:
- EP-A- 1 782 993
- FR-A- 2 882 701
- FR-A- 2 905 638

## Description

L'invention concerne un dispositif anti-siphonage comportant, sous une goulotte avec un orifice de remplissage d'un réservoir de carburant, une virole perforée comportant un fond conçu apte à empêcher l'introduction d'un tuyau de siphonage sous un niveau seuil, et comportant un clapet, monté pivotant à l'intérieur de ladite virole, pour l'obturation dudit orifice de remplissage dans une position de fermeture vers laquelle il est rappelé par des moyens de rappel.

L'application principale est l'équipement de réservoirs de carburant de véhicules automobiles, notamment de camions, en vue d'empêcher le vol du carburant par siphonage.

Le vol de carburant par siphonage des réservoirs des véhicules automobiles, notamment les camions, est relativement fréquent. Il est en effet aisé d'enlever le bouchon qui ferme le réservoir pour y introduire un tuyau souple et en siphonner le contenu.

Pour pallier cet inconvénient il existe des dispositifs anti-siphonage pour réservoir de carburant, qui se présentent sous la forme d'un manchon destiné à être introduit dans le tube de remplissage du réservoir et solidarisé au niveau de l'ouverture de celui-ci, et dont le fond est fermé tandis que la paroi est ajourée. De tels dispositifs sont par exemple décrits dans les documents US 1 931 335 et notamment FR 2 855 463 et FR 2882701 au nom du présent demandeur.

Ainsi, le dispositif objet du document FR 2 855 463 comprend un manchon ajouré de fond fermé, destiné à être introduit dans l'ouverture d'un réservoir, et comportant à son extrémité opposée à ce fond, un adaptateur comprenant deux parties dans le prolongement l'une de l'autre et séparées par une paroi annulaire solidaire du manchon, à savoir une première partie en extrémité selon les caractéristiques de l'embouchure, et, sous celle-ci, une seconde partie prévue apte à coiffer l'embouchure d'origine et comportant des éléments de coincement faisant saillie du manchon vers l'extérieur et apte à passer dans des évidements de la collerette de l'embouchure, et à s'insérer sous cette dernière pour y venir en butée, ainsi que des moyens de verrouillage prédécoupés dans la paroi du manchon, décalés angulairement par rapport aux éléments de coincement, et pliés vers l'extérieur, en passant par l'ouverture de l'adaptateur, pour se placer de l'autre côté de la butée.

Un tel dispositif fonctionne parfaitement, le fond fermant l'extrémité du manchon interdit le siphonage par tuyau, tandis que les ajours autorisent le remplissage du réservoir. Il est toutefois plus particulièrement adapté aux orifices de remplissage qui comportent, d'origine, un système de verrouillage à baïonnette de l'obturateur. Différents constructeurs, en particulier dans le domaine du poids lourd, équipent les réservoirs d'orifices de remplissage comportant d'autres profils, notamment un taraudage apte à coopérer avec un filetage que comporte un bouchon. La demande de brevet FR 07 59318 du présent demandeur expose les caractéristiques d'un dispositif anti-siphonage bien adapté à ce cas d'espèce.

On connaît des dispositifs anti-vol fixés sur l'orifice d'origine par des rivets, ou des vis, ou similaire, ce qui oblige à percer l'orifice d'origine, ou/et le réservoir, ce qui est à éviter en raison de la possible pollution du réservoir par des copeaux.

La demande de brevet FR 05 50578 du même demandeur perfectionne ces antivols pour interdire, encore, le vol de la quantité de carburant qui est au-dessus du fond du manchon ajouré. Elle décrit un dispositif comportant au moins un moyen d'obturation escamotable de l'orifice de remplissage en position de fermeture, et comportant un moyen de détection du niveau du liquide dans le réservoir, tel un flotteur, apte à assurer le maintien du moyen d'obturation escamotable en position de fermeture, tant que le liquide dans ledit réservoir est au-dessus d'un niveau seuil. Ce dispositif efficace renforce considérablement la sécurité face aux vols de carburant en empêchant le siphonage de toute quantité du liquide contenue dans le réservoir. Il reste néanmoins d'une réalisation coûteuse, en raison de l'ajustement précis des composants mécaniques qu'il renferme pour manoeuvrer un pêne de verrouillage en position de fermeture du moyen d'obturation.

La présente invention a pour but de proposer un dispositif anti-siphonage permettant de remédier aux divers inconvénients précités. En particulier, l'invention s'attache à proposer un dispositif anti-siphonage économique, à nombre réduit de composants, très fiable, et utilisable avec des variantes mineures pour l'utilisation en première monte, par exemple par soudage sur une goulotte d'origine, ou encore en seconde monte en venant coiffer cette dernière.

A cet effet, l'invention concerne un dispositif anti-siphonage comportant, sous une goulotte avec un orifice de remplissage d'un réservoir de carburant, une virole perforée comportant un fond conçu apte à empêcher l'introduction d'un tuyau de siphonage sous un niveau seuil, et comportant un clapet, monté mobile à l'intérieur de ladite virole, pour l'obturation dudit orifice de remplissage dans une position de fermeture vers laquelle il est rappelé par des moyens de rappel, et comportant encore des moyens de poussée sur ledit clapet pour s'opposer à son ouverture, qui sont commandés par le niveau de carburant dans le réservoir, lesdits moyens de poussée comportant au moins un premier flotteur immergé dans le carburant, caractérisé par le fait que ledit premier flotteur est enfermé dans une chambre perforée conçue apte à être immergée dans le carburant.

L'invention concerne encore un réservoir de carburant comportant un tel dispositif anti-siphonage.

L'invention concerne encore un véhicule comportant un tel réservoir de carburant.

D'autres avantages et caractéristiques du dispositif selon l'invention, ressortiront plus clairement de la description qui suit et qui se rapporte aux figures jointes, représentant des modes de réalisation non limitatifs, et dans lesquelles :
- la figure 1 représente une vue schématique en élévation d'un dispositif anti-siphonage selon l'invention selon une première variante d'exécution;
- la figure 2 représente une vue schématique en élévation du même dispositif tourné de 90°, avec une représentation partielle d'une virole perforée qu'il comporte;
- la figure 3 représente une vue de dessus du même dispositif, selon l'orientation de la figure 2;
- la figure 4 est une vue schématique analogue à la figure 1, du même dispositif installé dans un réservoir de carburant dont le niveau est inférieur à un niveau seuil;
- la figure 5 est une vue schématique analogue à la figure 4, présentant l'amplitude de débattement d'un clapet d'obturation qu'il comporte au niveau d'un orifice de remplissage incorporé audit dispositif;
- la figure 6 est une vue schématique analogue à la figure 4, du même dispositif en cours de remplissage par un pistolet, avec un niveau de carburant supérieur au niveau seuil;
- la figure 7 est une vue schématique analogue à la figure 6, du même dispositif en fin de remplissage et lors de l'extraction du pistolet, avec un niveau de carburant correspondant au plein;
- la figure 8 est une vue schématique analogue à la figure 7, du même dispositif après l'extraction complète du pistolet, avec un niveau de carburant correspondant au plein, et le clapet d'obturation rabattu sur l'orifice de remplissage;
- la figure 9 est une vue schématique analogue à la figure 8, du même dispositif après l'extraction complète du pistolet, avec un niveau de carburant compris entre le niveau seuil et le plein, et l'application d'un effort sur le clapet d'obturation ;
- la figure 10 est une vue schématique analogue à la figure 1 d'un dispositif anti-siphonage de première monte selon l'invention ;
- la figure 11 est une vue schématique analogue à la figure 2 du dispositif de la figure 10 ;
- la figure 12 représente une vue schématique en perspective d'un dispositif anti-siphonage selon l'invention selon une seconde variante d'exécution;
- la figure 13 illustre de façon schématisée et en transparence, en élévation, le dispositif de la figure 12 installé dans un réservoir de carburant dont le niveau est inférieur à un niveau seuil;
- la figure 14 est une vue schématique analogue à la figure 13, du même dispositif en cours de remplissage par un pistolet, avec un niveau de carburant inférieur au niveau seuil;
- la figure 15 est une vue schématique analogue à la figure 13, du même dispositif en cours de remplissage par un pistolet, avec un niveau de carburant supérieur au niveau seuil;
- la figure 16 est une vue schématique analogue à la figure 13, du même dispositif après l'extraction complète du pistolet, avec un niveau de carburant correspondant au plein, et le clapet d'obturation rabattu sur l'orifice de remplissage;
- la figure 17 est une vue schématisée et en élévation du dispositif de la figure 12 ;
- la figure 18 est une vue schématisée et de bout du dispositif de la figure 17 ;
- la figure 19 est une vue schématisée et en perspective d'un clapet d'obturation que comporte le dispositif de la figure 12.

L'invention concerne un dispositif anti-siphonage 1, destiné à être implanté à l'ouverture d'un réservoir 2 de carburant d'un véhicule, délimité par une cloison extérieure de réservoir 3 de laquelle s'étend une bride de réservoir 4, tubulaire, et, au moins en Europe, standardisée selon des diamètres extérieurs bien définis, notamment 80 ou 105 mm, qui se termine, du côté d'une orifice de remplissage 5, par une face d'appui 6.

Ce dispositif anti-siphonage 1 reprend différentes caractéristiques des demandes de brevet du même déposant, FR 03 06395, FR 05 50578, FR 07 59318, et PCT/FR2006/050373.

L'invention a pour but d'interdire toute ouverture, susceptible de permettre l'introduction d'un tuyau de siphonage, d'un orifice de remplissage 5 d'un réservoir 2, tant que le niveau du carburant dans le réservoir est supérieur à une valeur seuil S. L'introduction d'un pistolet de remplissage 17 dans l'orifice de remplissage 5 n'est donc possible qu'à cette condition. On ne peut notamment pas réintroduire le pistolet 17 dans le réservoir 2 en cas de remplissage incomplet supérieur au seuil S.

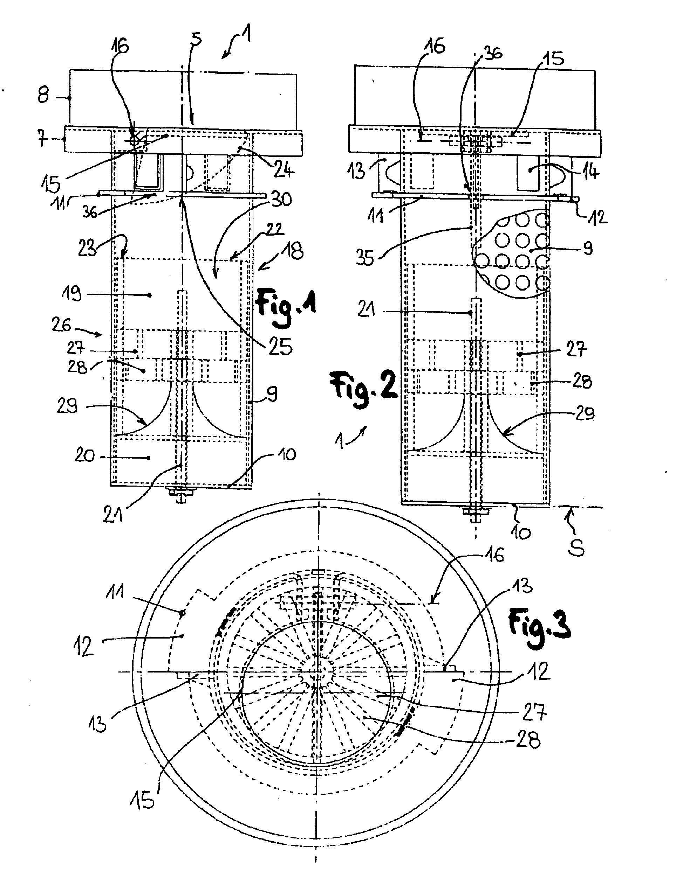

En particulier, tel que visible sur les figures 1 et 2, le dispositif 1 comporte, conçue apte à venir coiffer la bride de réservoir 4, de préférence en appui sur la face 6, une bride de goulotte 7. Cette dernière est surmontée d'une goulotte 8 comportant l'orifice de remplissage 5. Quand le dispositif 1 est utilisé en seconde monte, sa goulotte 8 est réalisée identique à celle d'origine, que vient alors coiffer la bride de goulotte 7.

Cette dernière est soudée sur un manchon de préférence réalisé sous la forme d'une virole perforée 9, qui s'étend, sensiblement perpendiculairement à l'orifice de remplissage 5 et sous ce dernier, selon la direction D d'introduction d'un pistolet de remplissage. Cette virole 9 est perforée pour autoriser le remplissage du réservoir 2, elle comporte un fond 10, de préférence également perforé, conçu apte à empêcher l'introduction d'un tuyau de siphonage sous un niveau seuil S.

Selon l'invention, le dispositif anti-siphonage 1 comporte, sous une goulotte 8 avec un orifice de remplissage 5 d'un réservoir de carburant 2, une virole perforée 9 comportant un fond 10 conçu apte à empêcher l'introduction d'un tuyau de siphonage sous un niveau seuil S, et comporte un clapet 15, monté mobile, et notamment pivotant, à l'intérieur de cette virole 9, pour l'obturation de l'orifice de remplissage 5 dans une position de fermeture vers laquelle il est rappelé par des moyens de rappel. Le dispositif 1 comporte encore des moyens de poussée 18 sur ce clapet 15 pour s'opposer à son ouverture, qui sont commandés par le niveau de carburant dans le réservoir 2. Ces moyens de poussée 18 comportent au moins un premier flotteur 19 immergé dans le carburant. Selon l'invention, ce premier flotteur 19 est enfermé dans une chambre perforée conçue apte à être immergée dans le carburant.

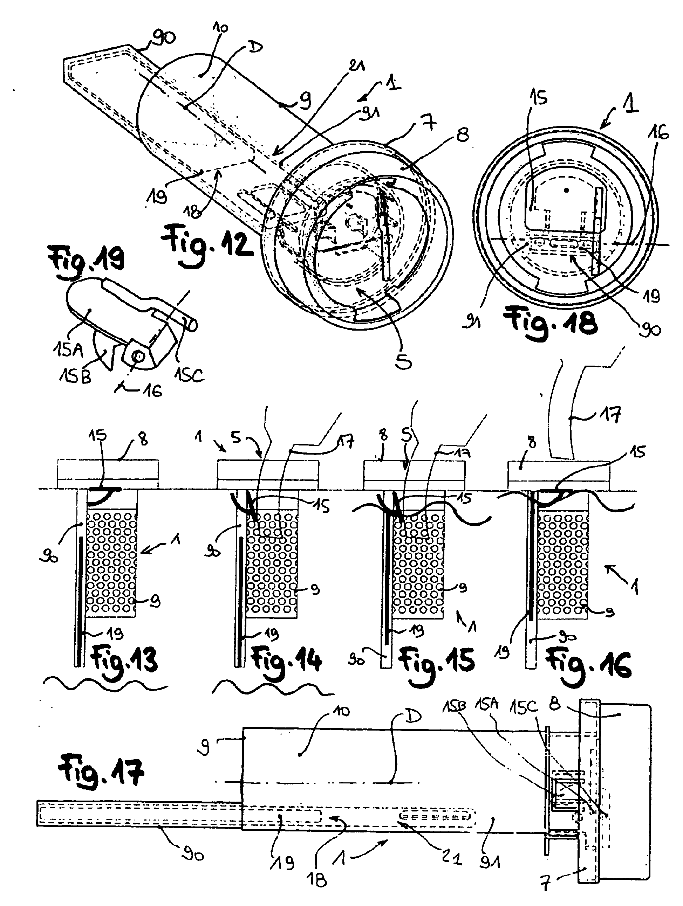

Cette chambre perforée peut, tel que visible sur les figures 1 à 11, être constituée par la virole 9 ou être intégrée dans cette dernière. La chambre perforée enfermant le premier flotteur 19 peut encore, tel que visible sur les figures 12 à 18, être une chambre perforée 90, distincte de la virole 9 dont l'espace interne est alors dévolu à la réception d'un pistolet de remplissage 17.

De façon préférée, le dispositif 1 comporte, pour l'obturation de l'orifice de remplissage 5, un clapet 15. Ce clapet 15, de façon avantageuse, pivote autour d'un axe de clapet 16 excentré, de préférence situé à sa périphérie, et son débattement a lieu vers l'intérieur du réservoir 2 vers lequel est sa position d'ouverture, et en particulier à l'intérieur de la virole 9. Il est rappelé vers sa position de fermeture de l'orifice de remplissage 5 par des moyens de rappel, notamment de rappel élastique, non représentés sur les figures. Il porte, par une partie plane, sur cet orifice de remplissage 5, par l'intermédiaire de moyens d'étanchéité, tels que joints ou similaires, non représentés sur les figures.

Selon l'invention, le dispositif 1 comporte des moyens de poussée 18 sur le clapet 15, qui sont commandés par le niveau de carburant dans le réservoir 2. De façon préférée, tel que visible sur les figures, ces moyens de poussée 18 comportent au moins un premier flotteur 19 immergé dans le carburant, de préférence enfermé dans la virole 9. On comprend qu'il est également possible d'utiliser des flotteurs extérieurs à la virole 9, mais un tel montage peut se traduire par un encombrement diamétral plus important, ce qui explique le mode préféré et économique de réalisation selon la première variante d'exécution avec un premier flotteur 19 interne à la virole 9. Dans une variante, le premier flotteur est un flotteur extérieur à la virole 9. Un tel flotteur extérieur est de préférence guidé par des moyens de guidage du flotteur extérieur, tels qu'un axe sur lequel se déplace ce dernier, ou une chambre perforée 90 dans laquelle il se déplace, ou similaire. De préférence, ces moyens de guidage du flotteur extérieur sont rendus solidaires de la virole 9. Dans une réalisation particulière, ils sont constitués par la surface externe de la virole 9 elle-même, le flotteur extérieur comportant alors une ouverture de profil complémentaire au profil de la virole 9. Avantageusement, l'un et l'autre profils sont cylindriques. La seconde variante de réalisation, tel que visible sur les figures 12 à 19, comporte une chambre perforée 90 s'étendant selon une direction longitudinale sensiblement parallèle à celle de la virole 9. Dans le cas de réalisation d'un clapet 15 à axe de clapet excentré, le dispositif anti-siphonage 1 comporte nécessairement une zone de section supérieure à celle de la virole 9, pour loger l'articulation de ce clapet 15. Il est alors avantageux de prolonger cette zone du mécanisme par une chambre perforée 90, par exemple réalisée avec une section rectangulaire tel que visible sur les figures, ce qui permet une réalisation très simple et économique. Le premier flotteur 19 est alors également de section rectangulaire, il peut avantageusement être guidé par un guide-flotteur 91 de section en U, disposé dans la chambre perforée 90. Ce guide-flotteur assez rigide supporte avantageusement le mécanisme de mouvement du clapet 15, en particulier l'axe de pivot 16 si cette solution est retenue. On notera à ce propos que le choix du pivotement est une possibilité de réalisation très économique, mais la mobilité du clapet 15 peut être assurée par d'autres cinématiques sans pour autant s'éloigner de l'invention.

On comprend que les moyens de poussée 18 peuvent comporter plusieurs premiers flotteurs 19, intérieurs ou/et extérieurs à la virole 9.

Il est important de disposer, en fait, d'une butée mobile, qui doit être de résistance suffisante pour actionner le mécanisme, et s'opposer à un effort de pénétration ou de destruction. A cet effet, l'extrémité du premier flotteur 19, du côté du clapet 15, soit est munie d'un renfort en alliage métallique, matière plastique dure ou similaire, soit est conçue comme un piston conçu pour mouvoir une butée mobile, là aussi en alliage métallique, matière plastique dure ou similaire, à l'intérieur de la chambre perforée.

Il est, ainsi, particulièrement avantageux de superposer au moins un premier flotteur 19 et une telle butée mobile, cette dernière disposée du côté du clapet 15.

Dans une configuration particulière, la virole 9 sert de guidage à la fois à un premier flotteur 19 intérieur et à un premier flotteur 19 extérieur.

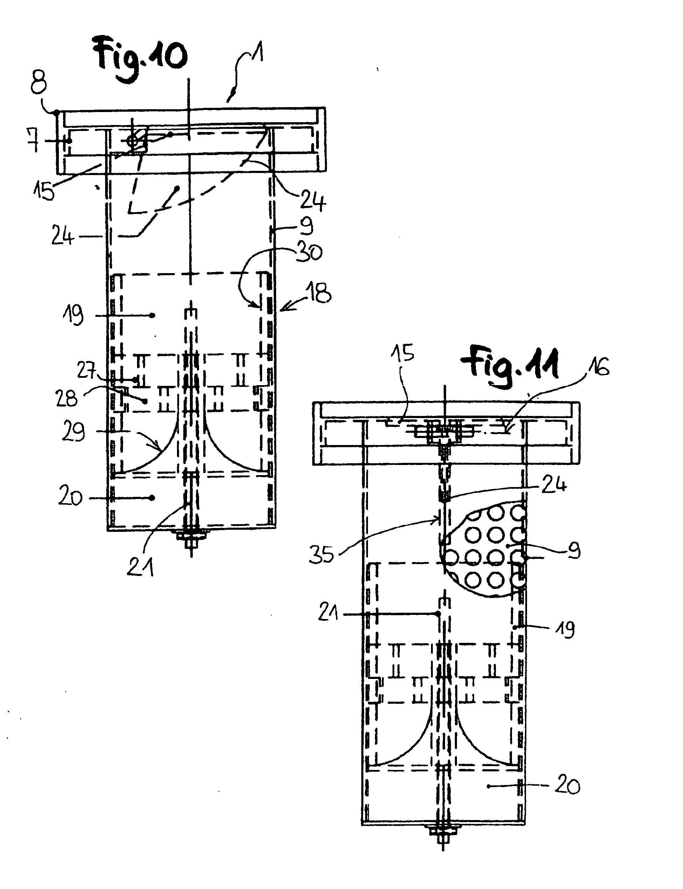

Les figures 10 et 11 illustrent un dispositif 1, dans la variante d'un équipement de première monte. Dans ce cas, la bride de goulotte 7 est une bride de maintien solidement fixée, par exemple par soudure, dans la goulotte 8 , cette dernière ou la bride de maintien 7 pouvant comporter un épaulement pour un montage en butée et un positionnement parfait.

Pour des questions d'encombrement et de cinématique, ce premier flotteur 19 est avantageusement complété par au moins un second flotteur 20 en matériau de densité inférieure à celle du premier flotteur 19, par exemple en mousse légère ou matière plastique de faible densité pour le second flotteur 20 tandis que le premier flotteur 19 est en matière plastique plus dense ou en alliage métallique, et ce second flotteur 20 étant placé sous le premier flotteur 19 et conçu apte à pousser ce dernier vers le haut quand il est immergé dans le carburant contenu dans le réservoir 2. Afin d'éviter tout coincement ou marche en crabe du ou des flotteurs, un moyen de guidage 21, en particulier sous la forme d'un axe, notamment fixé au fond 10, est utilisé pour guider le premier flotteur 19 ou/et le second flotteur 20 selon la direction D, notamment verticale.

On peut ainsi choisir entre l'empilage de flotteurs proprement dits, et l'empilage d'au moins un flotteur 19 supportant une butée mobile non flottante en raison de sa densité.

Dans la variante à flotteur extérieur à la virole 9, la même disposition de superposition de ce flotteur extérieur et d'un second flotteur de densité inférieure à celle de ce dernier est applicable de la même façon. Les moyens de guidage du flotteur extérieur, décrits plus haut, peuvent alors avantageusement constituer le moyen de guidage 21 décrit ci-dessus.

Le premier flotteur 19, ou encore la butée mobile qui le surmonte, est conçu pour exercer une action sur le clapet 15, pour s'opposer à son ouverture. Il doit aussi autoriser la pénétration d'un pistolet 17 pour le remplissage du réservoir 2. De ce fait il ne peut y avoir de contact direct entre ce premier flotteur 19 et la surface plane du clapet 15 pour l'obturation de l'orifice de remplissage 5. Aussi le premier flotteur 19 comporte avantageusement, à son extrémité supérieure 22, une première surface de contact 23, de préférence annulaire. Celle-ci est conçue apte à coopérer avec au moins une seconde surface de contact 25 que comporte un gousset de clapet 24, de préférence en forme de chape, qui s'étend sous le clapet 15, leur coopération ayant lieu dans certaines positions du premier flotteur 19 et du clapet 15. Ce gousset de clapet 24 agit comme un palonnier, poussé par le premier flotteur 19, pour exercer sur le clapet 15 un couple tendant à sa fermeture, qui s'ajoute au couple de rappel provoqué par les moyens de rappel élastique.

La virole 9 comporte une découpe, notamment une fente, 35, conçue apte à autoriser la traversée du gousset de clapet 24.

Tel que visible sur la figure 3, pour les équipements de seconde monte, le dispositif 1 comporte avantageusement un déflecteur 11, à distance sous la bride de goulotte 7. Ce déflecteur 11, de préférence sous la forme d'un anneau plan perpendiculaire à la direction D, présente des ergots 12 conçus aptes à coopérer avec des encoches correspondantes d'une goulotte d'origine que comporte le réservoir 2. Pour le verrouillage, par rotation, du dispositif 1 sur cette dernière, des butées 13 assurent l'arrêt en verrouillage en rotation par rapport à la goulotte d'origine. Une fois, la position de butée des butées 13 atteinte après rotation et mise en butée sur une butée d'origine que comporte la goulotte d'origine, chaque butée 13 coopère avec une patte repliable 14, de préférence ménagée dans la virole 9. Cette patte repliable 14 est alors pliée pour immobiliser, ensemble avec cette butée 13, cette butée d'origine. Celle-ci est ainsi immobilisée entre une butée 13 et une patte 14 qui sont disposées chacune sur un de ses côtés opposés. Le pliage de la patte 14 génère, si la patte 14 est issue de la virole 9, une ouverture. Le déflecteur 11 a pour fonction de barrer l'accès à la ou aux ouvertures résultantes du pliage des pattes 14, de façon à empêcher l'introduction d'un flexible dans le réservoir pour son siphonage. On comprend que les ergots 12 associés au déflecteur 11 constituent ainsi une chicane en S s'opposant au passage d'un tuyau de siphonage. Les pattes repliables 14 sont de préférence disposées en périphérie de la virole 9 entre le déflecteur 11 et la bride de goulotte 7, et empêchent ainsi, après rabattement, toute rotation du dispositif 1 selon l'invention par rapport à la goulotte d'origine. Elles s'opposent à son arrachement par traction, notamment dans la direction D, et dans le sens opposé au fond du réservoir 2. Le pliage de ces pattes 14 permet d'empêcher la rotation de l'anti-vol dans le sens inverse à celui de son montage. Comme la virole 9, le déflecteur 11 comporte une découpe, notamment une fente, 36, pour autoriser sa traversée.

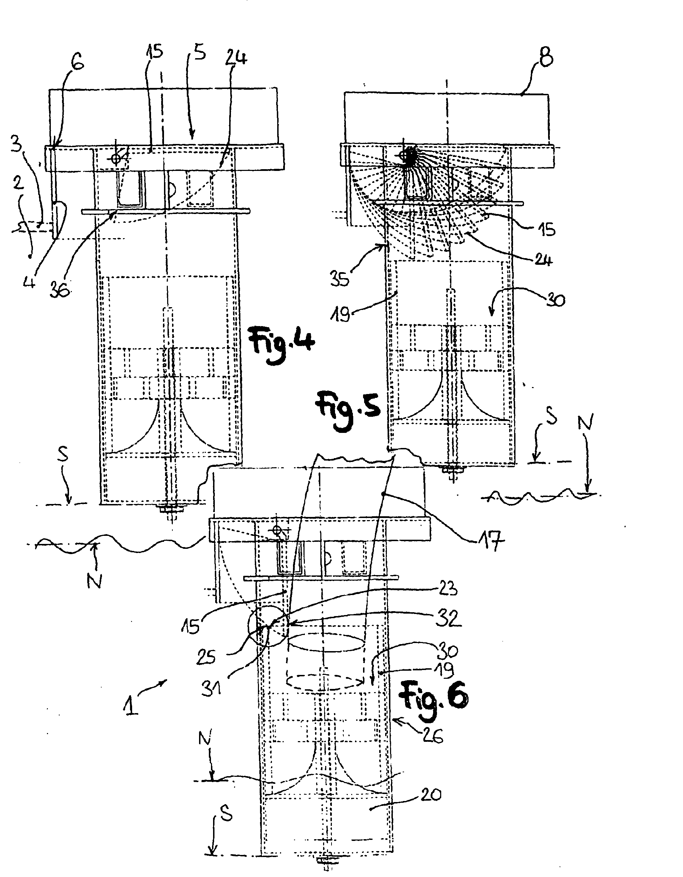

Le premier flotteur 19 comporte, avantageusement, un évidement 30 conçu apte à autoriser l'introduction du pistolet 17, profondément dans le dispositif 1, et en particulier dans le flotteur 19, tel que visible sur la figure 6.

De façon préférée, le premier flotteur 19 comporte des moyens pour s'opposer à la pénétration d'un tube, notamment sous forme d'au moins une chicane 26 constituée de passages de fluide alternés, dans le sens vertical, avec des obstacles. Cette chicane est par exemple réalisée sous la forme de deux roues à rayons 27 et 28, décalées angulairement d'un demi-pas de rayon.

De façon avantageuse, le premier flotteur 19 comporte encore, pour faciliter le remplissage et éviter les refoulements de carburant, un déviateur de jet 29, par exemple sous forme d'une surface de révolution concave et de section s'élargissant du haut vers le bas, et qui constitue, en combinaison avec la chicane 26, des alvéoles de dispersion du carburant. Ce dernier est, ainsi, dévié radialement par rapport à la direction D lors du remplissage du réservoir 2.

La figure 4 illustre un état du réservoir 2 où le niveau de carburant N est inférieur au seuil S. Le premier flotteur 19, et le ou les seconds flotteurs 20, ne sont pas en contact avec le carburant, et reposent en position de repos sur le fond 10 de la virole 9.

Tel que visible sur la figure 5, le clapet 5 a alors un débattement libre dans toutes les positions qu'autorise son implantation.

La distance entre, d'une part le plan de jonction entre la bride de goulotte 7 et la goulotte 8, et d'autre part le seuil S, est déterminée en fonction de la forme du ou des flotteurs.

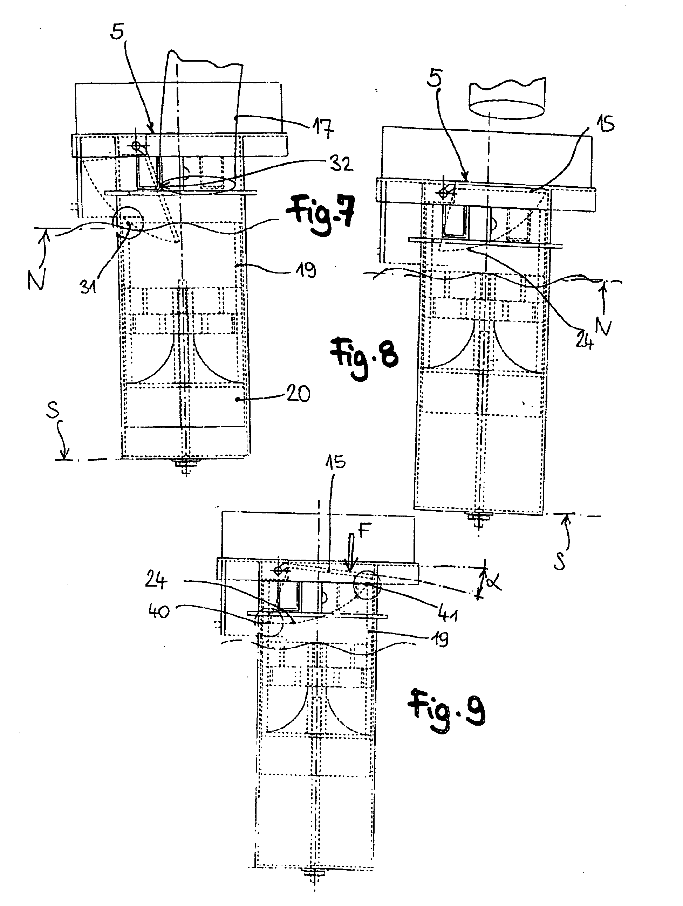

A ce stade, il est alors possible d'introduire un pistolet de remplissage 17, tel que visible sur la figure 6. Le pistolet 17 appuie sur le clapet 15 au niveau d'une surface de contact 32. Ce pistolet 17 peut être descendu dans l'évidement 30, tel que visible en trait interrompu sur la figure 7, jusqu'à venir en butée sur la chicane 26, notamment la roue supérieure 27 de cette dernière. On peut alors remplir le réservoir 2, et laisser monter le niveau de carburant N au-dessus du seuil S. Lors de cette montée, au moins le premier flotteur 19 remonte, et, dans une position correspondant à la figure 6, vient en contact, par sa première surface de contact 23, avec la seconde surface de contact 25 du gousset de clapet 24, en un point ou une surface 31. L'ajout d'un ou plusieurs seconds flotteurs 20 permet de pousser le premier flotteur 19 vers le haut du dispositif 1.

Le premier flotteur 19 ne peut remonter au-dessus de cette position, aussi longtemps que le pistolet 17 empêche le rabattement du clapet 15 ou/et empêche la remontée du premier flotteur 19. La figure 7 illustre un niveau N de carburant encore supérieur, notamment proche du plein, et le début de l'extraction du pistolet 17. Le clapet 15 peut alors, sous l'effet de ses moyens de rappel élastique, amorcer un mouvement angulaire vers sa position de fermeture. Son mouvement de rotation autorise la remontée concomitante du premier flotteur 19, dont le point de contact 31 avec le gousset de clapet 24 se déplace le long de la seconde surface de contact 25 de ce dernier.

La figure 8 montre le clapet 15 dans sa position de fermeture, et le premier flotteur 19 dans sa position la plus haute, dans laquelle il vient en butée sous le clapet 15 ou sous son support. Il s'oppose alors à l'ouverture du clapet. En effet, tel que visible sur la figure 9 où un effort F est appliqué sur le clapet 15, cet effort autorise une course angulaire α très réduite. Cette dernière, choisie de préférence inférieure ou égale à 6°, correspond au cumul des jeux fonctionnels calculés pour garantir un fonctionnement parfait du dispositif 1 dans des plages de température très larges, et prendre en compte les dilatations de ses composants.

Tel que visible sur la figure 9, après cette course angulaire a, une double sécurité empêche de forcer le passage de l'ouverture de remplissage 5: le gousset de clapet 24 est dessiné pour présenter un becquet arrière. Ce dernier est conçu apte, à proximité de la position de fermeture, à venir en arc-boutement en un point ou une surface de contact 40 sur la cloison interne, dans l'évidement 30, du premier flotteur 19, et bloque ce dernier en translation. Le bord inférieur du clapet 15 vient en butée, en un point ou une surface de contact 41, sur la première surface de contact supérieure 30 du premier flotteur 19, ce qui interdit la poursuite du pivotement du clapet 15.

A ce stade, à la fois le premier flotteur 19 et le clapet 15 sont bloqués, et il est impossible de mouvoir le clapet 15 tant que le niveau de carburant N n'est pas redescendu sous le seuil S, dans la configuration de la figure 4.

On comprend que, dans la variante à flotteur extérieur à la virole 9, la chicane 26 à l'intérieur de cette dernière n'est plus nécessaire. De même, le déviateur de jet 29 est facultatif, dans la mesure où le pistolet de remplissage peut alors descendre jusqu'au fond 10 de la virole 9.

Le fonctionnement est similaire pour la seconde variante d'exécution, tel que visible sur les figure 13 à 16 illustrant sa cinématique. Le clapet 15 est visible sur les figures 12, 17, 18 et 19. Il comporte avantageusement une trappe pivotante 15A, renforcée par des ergots de renfort 15B vers l'intérieur du réservoir 2, et comporte de préférence, du côté de la goulotte 8, un arrêt 15C anti-bouchon solidaire de la trappe 15A. Ce dernier permet d'éviter que la personne effectuant le remplissage du réservoir tente de maintenir le clapet 15 dans une position qui permette l'introduction d'un tuyau de siphonage : en effet, l'arrêt 15C anti-bouchon empêche dans ce cas, de par sa conception, le positionnement et la fermeture du bouchon de fermeture du réservoir sur la goulotte 8, ce qui est aisément contrôlable à l'oeil par le chauffeur du véhicule. Le clapet 15 est rappelé par des moyens de rappel tels que des ressorts vers sa position de fermeture.

L'invention concerne encore un réservoir de carburant comportant un tel dispositif anti-siphonage 1.

L'invention concerne encore un véhicule comportant un tel réservoir de carburant.

## Revendications

1. Dispositif anti-siphonage (1) comportant, sous une goulotte (8) avec un orifice de remplissage (5) d'un réservoir de carburant (2), une virole perforée (9) comportant un fond (10) conçu apte à empêcher l'introduction d'un tuyau de siphonage sous un niveau seuil (S) , et comportant un clapet (15), monté mobile à l'intérieur de ladite virole (9), pour l'obturation dudit orifice de remplissage (5) dans une position de fermeture vers laquelle il est rappelé par des moyens de rappel, et comportant encore des moyens de poussée (18) sur ledit clapet (15) pour s'opposer à son ouverture, qui sont commandés par le niveau de carburant dans le réservoir (2), lesdits moyens de poussée (18) comportant au moins un premier flotteur (19) immergé dans le carburant, **caractérisé par le fait que** ledit premier flotteur (19) est enfermé dans une chambre perforée conçue apte à être immergée dans le carburant.

2. Dispositif anti-siphonage (1) selon la revendication 1 **caractérisé par le fait que** ledit premier flotteur (19) est complété par au moins un second flotteur (20) de densité inférieure à celle du premier flotteur (19), ce second flotteur (20) étant placé sous le premier flotteur (19) et conçu apte à pousser ce dernier vers le haut quand il est immergé dans le carburant contenu dans ledit réservoir (2).

3. Dispositif anti-siphonage (1) selon la revendication 1 ou 2, **caractérisé par le fait que** ledit premier flotteur (19) est enfermé dans ladite virole (9).

4. Dispositif anti-siphonage (1) selon la revendication 1 ou 2, **caractérisé par le fait que** ledit premier flotteur (19) est un flotteur extérieur à ladite virole (9) et est guidé par des moyens de guidage du flotteur extérieur, constitués par un axe sur lequel se déplace ledit flotteur extérieur.

5. Dispositif anti-siphonage (1) selon la revendication 1 ou 2, **caractérisé par le fait que** ledit premier flotteur (19) est un flotteur extérieur à ladite virole (9) et est guidé par des moyens de guidage (21) du flotteur extérieur, constitués par une chambre (90) dans laquelle il se déplace.

6. Dispositif anti-siphonage (1) selon la revendication 1, **caractérisé par le fait qu'**il comporte un moyen de guidage (21) pour guider ledit premier flotteur (19) selon une direction (D) verticale.

7. Dispositif anti-siphonage (1) selon la revendication 2, **caractérisé par le fait qu'**il comporte un moyen de guidage (21) pour guider ledit premier flotteur (19) ou/et ledit second flotteur (20) selon une direction (D) verticale.

8. Dispositif anti-siphonage (1) selon l'une des revendications précédentes, **caractérisé par le fait que** ledit clapet (15) est monté pivotant à l'intérieur de ladite virole (9) autour d'un axe de pivotement (16).

9. Dispositif anti-siphonage (1) selon l'une des revendications précédentes, **caractérisé par le fait que** ledit premier flotteur (19) comporte, à son extrémité supérieure (22), une première surface de contact (23), conçue apte à coopérer avec au moins une seconde surface de contact (25) que comporte un gousset de clapet (24), qui s'étend sous le clapet (15), et qui agit comme un palonnier, poussé par le premier flotteur (19), pour exercer sur le clapet (15) un couple tendant à sa fermeture, qui s'ajoute au couple de rappel provoqué par lesdits moyens de rappel.

10. Dispositif anti-siphonage (1) selon la revendication 9, **caractérisé par le fait que** ladite virole (9) comporte une découpe (35), conçue apte à autoriser la traversée dudit gousset de clapet (24).

11. Dispositif anti-siphonage (1) selon l'une des revendications précédentes, **caractérisé par le fait que** ledit premier flotteur (19) comporte un évidement (30) conçu apte à autoriser l'introduction d'un pistolet de remplissage (17).

12. Dispositif anti-siphonage (1) selon les revendications 9 et 11, **caractérisé par le fait que** ledit gousset de clapet (24) présente un becquet arrière, conçu apte, à proximité de ladite position de fermeture, à venir en arc-boutement en un point ou une surface de contact (40) sur une cloison interne, dans ledit évidement (30), dudit premier flotteur (19), pour bloquer ce dernier en translation et interdire l'ouverture dudit clapet (15).

13. Dispositif anti-siphonage (1) selon l'une des revendications précédentes, **caractérisé par le fait que** ledit premier flotteur (19) comporte des moyens pour s'opposer à la pénétration d'un tube, sous forme d'au moins une chicane (26) constituée de passages de fluide alternés, dans le sens vertical, avec des obstacles.

14. Dispositif anti-siphonage (1) selon l'une des revendications précédentes, **caractérisé par le fait que** ledit premier flotteur (19) comporte, pour faciliter le remplissage et éviter les refoulements de carburant, au moins un déviateur de jet (29) conçu apte à dévier le carburant radialement par rapport à la direction verticale lors du remplissage du réservoir (2).

15. Dispositif anti-siphonage (1) selon l'une des revendications précédentes, **caractérisé par le fait qu'**il comporte, monté à distance sous une bride de goulotte (7), située sous ladite goulotte (8) et conçue apte à venir coiffer une bride (4) du réservoir (2), un déflecteur (11) présentant des ergots (12) conçus aptes à coopérer avec des encoches correspondantes d'une goulotte d'origine dudit réservoir, ledit dispositif (1) comportant encore, pour son verrouillage par rotation sur cette dernière, des butées (13), qui après rotation et mise en butée sur une butée d'origine que comporte la goulotte d'origine, coopèrent chacune avec une patte repliable (14) qui est alors pliée, pour immobiliser ensemble ladite butée d'origine, ledit déflecteur (11) ayant pour fonction de barrer l'accès aux ouvertures résultantes du pliage desdites pattes (14), de façon à empêcher l'introduction d'un flexible dans le réservoir pour son siphonage.

16. Dispositif anti-siphonage (1) selon les revendications 9 et 15, **caractérisé par le fait que** ledit déflecteur (11) comporte une découpe (36) pour autoriser la traversée dudit gousset de clapet (24).

17. Réservoir de carburant (2) comportant un dispositif anti-siphonage (1) selon l'une des revendications précédentes.

18. véhicule comportant un réservoir de carburant équipé selon la revendication précédente.

## Claims

1. Anti-siphon device (1), including, under a spout (8) with an opening (5) for filling a fuel tank (2), a perforated sleeve (9) including a bottom (10) designed capable of impeding the insertion of a siphoning tube under a threshold level (S), and including a check valve (15), which is mounted movably inside said sleeve (9), in order to close said filling opening (5) in a close position to which it is restored by restoring means, and also including means for pushing (18) against said check valve (15) in order to impede its opening, which are controlled by the fuel level in the tank (2), said pushing means (18) including at least a first float (19) immersed into the fuel, wherein said first float (19) is enclosed in a perforated chamber designed capable of being immersed in the fuel.

2. Anti-siphon device (1) according to claim 1, wherein said first float (19) is complemented with at least a second float (20) having a density flower than that of the first float (19), this second float (20) being placed under the first float (19) and designed capable of pushing the latter upwards when it is immersed in the fuel contained in said tank (2).

3. Anti-siphon device (1) according to claim 1 or 2, wherein said first float (19) is enclosed in said sleeve (9).

4. Anti-siphon device (1) according to claim 1 or 2, wherein said first float (19) is a float external to said sleeve (9) and is guided by means for guiding the external float, formed by an axis, on which said external float moves.

5. Anti-siphon device (1) according to claim 1 or 2, wherein said first float (19) is a float external to said sleeve (9) and is guided by means (21) for guiding the external float, formed by a chamber (90), in which it moves.

6. Anti-siphon device (1) according to claim 1, wherein it includes a guiding means (21) for guiding said first float (19) in a vertical direction (D).

7. Anti-siphon device (1) according to claim 2, wherein it includes a guiding means (21) for guiding said first float (19) and/or said second float (20) in a vertical direction (D).

8. Anti-siphon device (1) according to one of the preceding claims, wherein said check valve (15) is mounted inside said sleeve (9) pivotally about a pivoting axis (16).

9. Anti-siphon device (1) according to one of the preceding claims, wherein said first float (19) includes, at its upper end (22), a first contact surface (23) designed capable of cooperating with at least a second contact surface (25), which a gusset plate of the check valve (24) includes and extends under the check valve (15) and acts as a spreader pushed by the first float (19), in order to exert onto the check valve (15) a torque, which is added to the restoring torque caused by said restoring means.

10. Anti-siphon device (I) according to claim 9, wherein said sleeve (9) includes a cut-out (35) designed capable of permitting the passing through of said check-valve gusset plate (24).

11. Anti-siphon device (1) according to one of the preceding claims, wherein said first float (19) includes a recess (30) designed capable of permitting the insertion of a filling pistol (17).

12. Anti-siphon device (1) according to claim 9 and 11, wherein said check-valve gusset plate (24) has a rear shoulder designed capable, proximate said closing position, of buttressing at a point or a contact surface (40) on an inner partition, in said recess (30) of said first float (19), in order to block the latter in translation and impede the opening of said check valve (15).

13. Anti-siphon device (1) according to one of the preceding claims, wherein said first float (19) includes means for impeding the insertion of a tube, in the form of at least one deflector (26) formed of alternating fluid passages, in the vertical direction, with hindrance.

14. Anti-siphon device (1) according to one of the preceding claims, wherein said first float (19) includes, in order to facilitate the filling and to avoid the returns of fuel, at least one jet deflector (29) designed capable of deflecting the fuel radially with respect to the vertical direction during the filling of the tank (2).

15. Anti-siphon device (1) according to one of the preceding claims, wherein it includes, mounted at a distance under a spout flange (7) located under said spout (8) and designed capable of covering a flange (4) of the tank (2), a deflector (11) having pins (12) designed capable of cooperating with corresponding notches of an original spout of said tank, said device (1) also includes, for ist locking by rotation on the latter, stops (13), which, upon rotation and stopping against an original stop the original spout includes, each cooperate with a foldable foot (14), which is then folder in order to immobilize together said original stop, said deflector (11) being aimed at impeding the access to the openings resulting from the fording of said feet (14), so as to impede the insertion of a hose into the tank for siphoning same.

16. Anti-siphon device (1) according to claims 9 and 15, wherein said deflector (11) includes a cut-out (36) in order to permit the passing through of said check-valve gusset plate (24).

17. Fuel tank (2) including an anti-siphon device (1) according to one of the preceding claims.

18. Vehicle including a fuel tank equipped according to the preceding claim.

## Patentansprüche

1. Treibstoff-Abzapfschutzvorrichtung (1), umfassend unter einer Rinne (8) mit einer Öffnung (5) für die Auffüllung eines Kraftstofftanks (2) einen durchlochten geschlossenen zylindrischen Mantel (9), der einen Boden (10) umfasst, der geeignet vorgesehen ist, um die Beinführung eines Entleerungsrohrs unterhalt einer Entnahmeschwelle (S) zu verhindern, und umfassend ein Klappenventil (15), das bewegbar im Innern des besagten geschlossenen zylindrischen Mantels (9) montiert ist, um die besagte Auffüllöffnung (5) in einer Schließungsposition abzusperren, in Richtung von welcher es durch Rückstellmittel zurückgebracht wird, und umfassend außerdem Mittel zum Druckern zu auf dem besagten Klappenventil (15), um sich seiner öffnung zu widersetzen, welche durch den Treibstoffstand in dem Tank (2) gesteuert werden, wobei die besagten Druckmittel (18) zumindest einen ersten, in dem Treibstoff eingetauchten Schwimmer (19) umfassen, **dadurch gekennzeichnet, dass** der besagte erste Schwimmer (19) in einer durchlochten Kammer eingefügt ist, die geeignet vorgesehen ist, um in den Treibstoff eingetaucht zu werden.

2. Treibstoff-Abzapfschutzvorrichtung (1) nach Anspruch 1 , **dadurch gekennzeichnet, dass** der besagte erste Schwimmer (19) mit zumindest einem zweiten Schwimmer (20) ergänzt ist, der eine Dichte aufweist, die kleiner ist als jene des ersten Schwimmers (19), wobei dieser zweite Schwimmer (20) unter dem ersten Schwimmer (19) angebracht sei und geeignet vorgesehen ist, um diesen letzteren nach oben zu drücken, wenn er in dem Treibstoff eingetaucht ist, der in dem besagten Tank (2) enthalten ist.

3. Treibstoff-Abzapfschutzvorrichtung (1) nach Anspruch 1 oder 2, **dadurch gekennzeichnet, dass** der besagte erste Schwimmer (19) in dem besagten geschlossenen zylindrischen Mantel (9) eingefugt ist.

4. Treibstoff-Abzapfschutzvorrichtung (1) nach Anspruch 1 oder 2, **dadurch gekennzeichnet, dass** der besagte erste Schwimmer (19) ein Schwimmer außerhalb des besagten geschlossenen zylindrischen Mantels (9) ist und durch Mittel zur Führung des Außenschwimmers geführt wird, die durch eine Achse gebildet sind, auf welcher sich der besagte Außenschwimmer bewegt.

5. Treibstoff-Abzapfschutzvorrichtung (1) nach Anspruch 1 oder 2, **dadurch gekennzeichnet, dass** der besagte erste Schwimmer (19) ein Schwimmer außerhalb des besagten geschlossenen zylindrischen Mantels (9) ist und durch Mittel zur Führung (21) des Außenschwimmers geführt wird, die durch eine Kammer (90) gebildet sind, in welcher er sich bewegt.

6. Treibstoff-Abzapfschutzvorrichtung (1) nach Anspruch 1, **dadurch gekennzeichnet, dass** sie ein Führungsmittel (21) umfasst, um den besagten ersten Schwimmer (19) nach einer senkrechten Richtung (D) zu fuhren.

7. Treibstoff-Abzapfschutzvorrichtung (1) nach Anspruch 2, **dadurch gekennzeichnet, dass** sie ein Führungsmittel (21) umfasst, um den besagten ersten Schwimmer (19) und/oder den besagten zweiten Schwimmer (20) nach einer senkrechten Richtung (D) zu führen.

8. Treibstoff-Abzapfschutzvorrichtung (1) nach einem der vorgehenden Ansprüche, **dadurch gekennzeichnet, dass** das besagte Klappenventil (15) im Innern des besagten geschlossenen zylindrischen Mantels (9) schwenkbar um eine Schwenkachse (16) gelagert ist.

9. Treibstoff-Abzapfschutzvorrichtung (1) nach einem der vorgehenden Ansprüche, **dadurch gekennzeichnet, dass** der besagte erste Schwimmer (19) an seinem oberen Ende (22) eine erste Berührungsfläche (23) umfasst, die geeignet vorgesehen ist, um mit zumindest einer zweiten Berührungsfläche (25) zusammenzuwirken, welche ein Knotenblech des Klappenventils (24) umfässt, das sich unter dem Klappenventil (15) erstreckt und als ein Lastaufnahmemittel wirkt, welches durch den ersten Schwimmer (19) angeschoben wird, zum auf das Klappenventil (15) ein Drehmoment für seine Schließung auszuüben, das zu dem Rückstelldrehmoment, welches durch die besagten Rückstellmittel verursacht ist, hinzukommt.

10. Treibstoff-Abzapfschutzvorrichtung (1) nach Anspruch 9, **dadurch gekennzeichnet, dass** der besagte geschlossene zylindrische Mantel (9) einen Ausschnitt (35) umfasst, der geeignet vorgesehen ist, um den Durchgang des besagten Knotenbleches des Klappenventils (24) zu erlauben.

11. Treibstoff-Abzapfschutzvorrichtung (1) nach einem der vorgehenden Ansprüche, **dadurch gekennzeichnet, dass** der besagte erste Schwimmer (19) eine Ausnehmung (30) umfasst, die geeignet vorgesehen ist, um die Einführung einer Füllpistole (17) zu erlauben.

12. Treibstoff-Abzapfschutzvorrichtung (1) nach Anspruch 9 und 11, **dadurch gekennzeichnet, dass** das besagte Knotenblech des Klappenventils (24) einen Heckspoiler aufweist, der geeignet vorgesehen ist, um nahe bei der besagten Schließungsposition an einem Punkt oder einer Berührungsfläche (40) auf einem Innenraumteiler in dem besagten Hohlraum (30) des besagten ersten Schwimmers (19) in Selbstsperrung zu kommen, um diesen letzteren in Translation zu sperren und das Öffnen des besagten Klappenventils (15) zu verhindern.

13. Treibstoff-Abzapfschutzvorrichtung (1) nach einem der vorgehenden Ansprüche, **dadurch gekennzeichnet, dass** der besagte erste Schwimmer (19) Mittel umfasst, um sich der Eindringung eines Rohrs zu widersetzen, in Form von zumindest einem Prallblech (26), das für die abwechselnden Fluiddurchlässe mit Hindernissen in vertikaler Richtung gebildet ist.

14. Treibstoff-Abzapfschutzvorrichtung (1) nach einem der vorgehenden Ansprüche, **dadurch gekennzeichnet, dass** der besagte erste Schwimmer (19), um das Auffüllen mit Kraftstoff zu vereinfachen und das Rücksaugen von Kraftstoff zu vermeiden, zumindest einen Strahlumlenker (29) umfasst, der geeignet vorgesehen ist, um den Treibstoff radial hinsichtlich der vertikalen Richtung während der Ausfüllung des Tanks (2) umzulenken.

15. Treibstoff-Abzapfschutzvorrichtung (1) nach einem der vorgehenden Ansprüche, **dadurch gekennzeichnet, dass** sie eine Prallplatte (11) umfasst, die beabstandet unter einem Flansch der Rinne (7) befestigt ist, der sich unter der besagten Rinne (8) befindet und geeignet vorgesehen ist, um auf einem Flansch (4) des Tanks (2) aufgesetzt zu werden, wobei diese Prallplatte die Verschlussstifte (12) aufweist, die geeignet vorgesehen sind, um mit den entsprechenden Auskerbungen einer ursprünglichen Rinne in dem besagten Tank zusammenzuwirken, wobei die besagte Vorrichtung (1) außerdem für ihre Verrastung durch Drehung auf dieser letzteren Anschläge (13) umfasst, die nach der Drehung und Anlage an einem ursprünglichen Anschlag, den die urspringliche Rinne umfasst, jeweils mit einer ausklappbaren Verschlussklappe (14) zusammenwirken, die dann zusammengeklappt wird, um den besagten ursprünglichen Anschlag zugleich umbeweglich zu machen, wobei die besagte Prallplatte (11) zur Aufgabe hat, den Zugang zu den Öffnungen, die durch das Zusammenklappen der besagten Verschlussklappen (14) gebildet sind, zu sperren, derart, um die Einführung eines Rohrs in den Tank zwecks seiner Entleerung zu verhindern.

16. Treibstoff-Abzapfschutzvorrichtung (1) nach den Ansprüche 9 und 15, **dadurch gekennzeichnet, dass** die besagte Prallplatte (11) einen Ausschnitt (36) umfasst, um den Durchgang des besagten Knotenblechs des Klappenventils (24) zu erlauben.

17. Kraftstofftank (2), der eine Treibstoff-Abzapfschutzvorrichtung (1) nach einem der vorgehenden Ansprüche umfasst.

18. Fahrzeug, umfassend einen Kraftstofftank, der nach dem vorgehenden Anspruch ausgestattet ist.
